# EUROPEAN PATENT APPLICATION

(11) **EP 3 929 791 A1**
(43) Date of publication of application: **29.12.2021**
(21) Application number: 21181641.8
(22) Date of filing: 25.06.2021
(51) Int. Cl.: G06F 30/23, B21D 5/02, G06F 113/24

(54) **METHOD FOR SIMULATING AND DESIGNING A SUPPORT STRUCTURE FOR ASSEMBLING OR GAGING A SHEET METAL PART**

(30) Priority: 26.06.2020 CH 7772020
(71) Applicant: AutoForm Engineering GmbH, 8808 Pfäffikon SZ (CH)
(72) Inventor: HARNAU, Matthias, 8808 Pfäffikon SZ (CH); SELIG, Mike, 8808 Pfäffikon SZ (CH)
(74) Representative: Frei Patent Attorneys

(57) **Abstract**

A computer-implemented method for simulating and designing a support structure (2) for assembling or gaging a sheet metal part (1) comprises, **in a simulation** of the sheet metal part (1) and support structure (2), designing a selection of support elements (3) and a position and orientation of the support elements (3) by displaying a computer based visual representation (5) of the sheet metal part (1) to a user. According to a user input, support elements (3) are placed relative to the sheet metal part (1). The method further comprises **automatically determining a stability status** indicating whether the sheet metal part (1) is stably held by the support elements (3), and **displaying** the stability status to the user.

## Description

The invention relates to the field of designing and manufacturing of parts, in particular of sheet metal parts, and tools for their manufacturing. It relates to a method for simulating and designing a support structure for assembling or gaging a sheet metal part.

When manufacturing and assembling parts made of sheet metal, the parts are, in certain stages of the manufacturing process, placed on support structures. Such support structures comprise, for example, support elements, guide pins, clamps etc. for supporting and/or holding the part while it is transported or while machining or assembly operations involving the part take place. Such support structures can also be used for holding parts while performing measurements on the part. This can be for gaging parts during production, as part of a quality control process. It is known to design such support structures in a computer aided design system, in which a computer based, numerical representation of the part and the support structure are manipulated by a user, using a graphical interface or display showing a visual representation of the part and support structure and allowing the user to interactively choose and place representations of support elements in relation to the part. The final result of this design process is an arrangement of support elements, in which a position and orientation of each support element is specified. This arrangement can be implemented in the real world by creating the support structure according to this specification. However, it can be the case that arrangements designed in this way are deficient.

It is therefore an object of the invention to create a method for simulating and designing a support structure for assembling or gaging a sheet metal part of the type mentioned initially, which improves the designs obtained, compared to known methods.

This object is achieved by a method for simulating and designing a support structure for assembling or gaging a sheet metal part according to the claims.

The computer-implemented method serves for simulating and designing a support structure for assembling or gaging a sheet metal part, wherein the process comprises
- placing a sheet metal part on a support structure; in which the sheet metal part is held by support elements;
- holding the sheet metal part by means of the support elements for assembly with one or more further parts or for gaging the sheet metal part;
   and the method comprises, **in a simulation** of the sheet metal part and support structure, designing a selection of support elements and a position and orientation of the support elements by,
- retrieving a position and orientation of the sheet metal part with respect to the support structure;
   and for each of a set of user-placed support elements,
- displaying a computer based visual representation of the sheet metal part to a user;
- accepting a user input to place the support element relative to the sheet metal part;
   wherein the method further comprises
- automatically determining a stability status of the sheet metal part as determined by the support elements;
- the stability status indicating whether the sheet metal part is stably held by the support elements;
- displaying the stability status to the user.

In this manner, the user is alerted to the fact that the arrangement of support elements is expected not to stably support the part, and should be modified. As a result, an arrangement for which the support status is shown to be satisfactory can be implemented in reality, without the danger of the implementation turning out not to properly support the part.

The position of the part specifies its location in 3D space, typically relative to a reference coordinate system with x, y, and z coordinates, the z coordinate corresponding to the direction of gravity. The orientation specifies the part's rotation, for example by three rotational angles between the reference coordinate system and a coordinate system attached to the part.

In embodiments, retrieving the position and orientation of the sheet metal part is accomplished by a user input determining at least one of the position and orientation.

In embodiments, retrieving the position and orientation of the sheet metal part is accomplished by retrieving, from computer memory, at least one of a standard position and as standard orientation associated with the part.

In embodiments, a location of one or more support elements is retrieved from computer memory.

In embodiments, the stability status comprises a representation of a **binary value,** indicating whether the sheet metal part will move or not, when held by the support elements and **being subject to no other forces than gravity.**

For example, if the support elements are located only at one side of the sheet metal part, then the part will tilt towards the other, unsupported side.

In embodiments, the stability status comprises a representation of a **binary value,** indicating whether movement of the sheet metal part is or is not **constrained with regard to all six degrees of freedom of movement** when held by the support elements.

That is, if it is constrained in this way, the sheet metal part will not move, when held by the support elements and being subject to arbitrary forces acting on the sheet metal part. Such forces can be exerted on the sheet metal part when it is machined while being held in the support structure.

In embodiments, displaying the stability status to the user comprises displaying on a display unit a **stability status indicator** being a representation **of a binary value.**

This assists the user in deciding whether to continue with the design process, or to terminate the design process.

In embodiments, the stability status comprises a representation of one or more **translation axes and rotation axes,** and in particular translation directions and rotation **directions** in which the sheet metal part is not constrained to move when held by the support elements.

Indicating an axis in which movement is possible does not yet specify whether this movement is in the positive or negative direction of translation or rotation, respectively. Indicating the direction removes this ambiguity.

In embodiments, displaying the stability status to the user comprises displaying on a display unit a **visual representation of these axes, in particular directions.**

In embodiments, this comprises displaying a representation of coordinate axes and marking axes, for example by colouring, in or around which movement is not constrained. This assists the user in identifying regions in which further support elements should be placed.

In embodiments, the method comprises **iteratively repeating** the steps of accepting user input **placing further support elements,** and automatically determining and displaying the stability status to the user, until the stability status indicates that the sheet metal part is stably held by the support elements, and storing a corresponding arrangement of support elements as a result arrangement.

The result is, in the simulation a configuration of support elements, in association with the sheet metal part. This configuration can be implemented with a real support structure and corresponding real support elements.

In embodiments, the step of accepting a user input to **place the support element** comprises accepting a user input specifying a **user specified location** on the visual representation of the sheet metal part and optionally a type of support element associated with this user specified location.

In embodiments, the user input specifying a location on the visual representation is accomplished by the user indicating and selecting the location on the visual representation by means of a pointing device, such as a computer mouse, pen, touchpad or the like.

In embodiments, the step of accepting a user input to **place the support element** comprises automatically determining a position and orientation of the support element based on a geometry of the sheet metal part at the user specified location.

For example, an orientation of a clamp is determined by the orientation of the sheet material near an edge at which the clamp is placed to hold the part. And an exact position of the clamp can be determined according to the position of the edge at which the clamp is located. Or, the orientation of a support element is determined so that an orientation of a supporting surface matches the orientation of the surface of the sheet metal part that it supports.

In embodiments, the method comprises the step of automatically **determining one or more parameters of the support element** based on the geometry of the sheet metal part at the user-specified location.

This allows, for example, that if the user specified location is at a positioning hole of the support element, then a diameter of a guide pin to be associated with the positioning hole is computed according to the diameter of the positioning hole.

In embodiments, the method comprises, after accepting the user input specifying a location on the visual representation of the sheet metal part, performing the step of **automatically determining a type of support element** to be associated with this user specified location.

This allows, for example, that if the user specified location is at a positioning hole of the support element, then the support element can automatically be determined to be a guide pin.

A **method for creating a support structure for a sheet metal part** comprises performing the steps of the method for simulating and designing a support structure for assembling or gaging a sheet metal part, thereby determining an arrangement of support elements, and manufacturing support structure with support elements according to this arrangement.

A computer program for the method for simulating and designing a support structure for assembling or gaging a sheet metal part according to the invention is loadable into an internal memory of a digital computer, and comprises computer program code to make, when said computer program code means is loaded in the computer, the computer execute the method according to the invention. In a preferred embodiment of the invention, the computer program product comprises a computer readable medium, having the computer program code means recorded thereon. A corresponding data processing system is programmed to execute the method, in particular by being programmed with the computer program codes. A **method of manufacturing a non-transitory computer readable medium,** comprises the step of storing, on the computer readable medium, computer-executable instructions which when executed by a processor of a computing system, cause the computing system to perform the method for simulating and designing a support structure for assembling or gaging a sheet metal part.

Further preferred embodiments are evident from the dependent patent claims.

The subject matter of the invention will be explained in more detail in the following text with reference to preferred exemplary embodiments which are illustrated in the attached drawings, which schematically show:
- Figure 1: a section of a sheet metal part 1 arranged on a support structure 2;
- Figures 2-3: different arrangements of support elements 3;
- Figure 4: a display unit 10 showing a simulated representation of the sheet metal part 1 and support elements 3; and
- Figure 5: a flow diagram of the method for simulating and designing the support structure 2.

In principle, identical or functionally identical elements are provided with the same reference symbols in the figures.

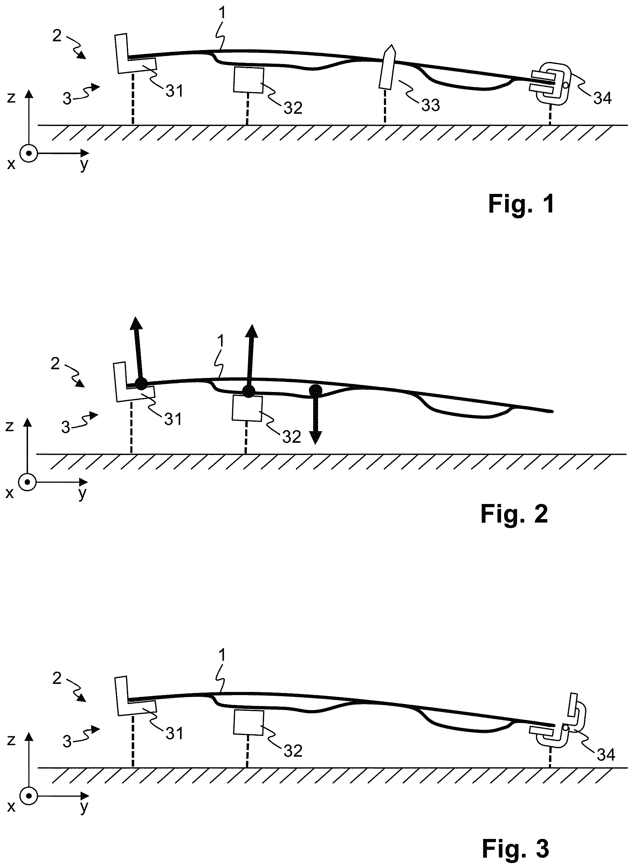

**Figure** 1 shows a section of a sheet metal part 1 arranged on a support structure 2. The support structure 2 comprises a number of support elements 3. These are, by way of example,
- a side constraint 31 supporting the sheet metal part 1 from below and limiting its movement to one side;
- a support element 32 supporting the sheet metal part 1 from below;
- a guide pin 33 passing through a positioning hole of the sheet metal part 1;
- a clamp 34 clamping and holding the sheet metal part 1.

A coordinate system with axes x, y, z is associated with the support structure 2. Rigid connections between the support structure 2 and support elements 3 are indicated by dashed lines.

Depending on the geometry of a particular support element 3 and the sheet metal part 1 where it is in contact with the support element 3, movement of the sheet metal part 1 is constrained in one or more dimensions of translation, and/or in one or more dimensions of rotation. A constraint can mean that the sheet metal part 1 cannot move at all in that dimension (of rotation or translation), or that movement is limited in one direction, or limited in two directions.

For example, the side constraint 31 limits movement of the sheet metal part 1, where it is in contact with the side constraint 31, to the left and downward. The support element 32 limits movement of the sheet metal part 1 along the z axis. More precisely, it limits a downward translation movement, in the negative z direction, but not upward, in the z direction. The guide pin 33 imposes limits of movement along the x and y axis. The clamp 34, when in an open state, limits movement of the sheet metal part 1 in the negative z direction. When in a closed state, it also limits movement in the positive z direction.

With regard to clamps 34, a first case is that the stability analysis is performed for all the clamps 34 being in an open state. This corresponds to the situation when the sheet metal part 1 is placed on the support structure 2 and must be stably supported until the clamps 34 are closed. Usually it is the case that when a clamp is open, one of its two opposing jaws or brackets is in contact with the sheet metal part 1 and so limits movement of the sheet metal part 1.

A second case is that the stability analysis is performed for one or more or all of the clamps 34 being in a closed state. This corresponds, for example, situations in which operations on the sheet metal part 1 take place, such as machining or welding or transfer operations.

The stability analysis can comprise one or both of the following analysis procedures:
- a **static analysis** for determining what remaining degrees of freedom of motion the sheet metal part 1 has, given an arrangement of support elements 3; and
- a **dynamic analysis** for determining whether the sheet metal part 1 will be at rest or will move under the force of gravity when supported by the given arrangement of support elements 3.

As already noted, each of the procedures can be performed for all clamps 34 being open, or one or more or all being closed.

In embodiments the static analysis is performed to determine in which dimensions the sheet metal part 1 is free to move, and the dynamic analysis is performed to determine whether it will move, that is, translate and/or rotate along one of these dimensions because contact to one or more support elements is lost under the force of gravity. Then the stability status can indicate that the sheet metal part 1 is both free to move and will move, and thus is not stably held by the support elements 3.

The stability status can comprise a binary variable, representing a status with labels such as "stable" and "unstable". If the sheet metal part 1 is either not free to move at all, or even if free will not move under the force of gravity, the status is **"stable".** If the sheet metal part 1 is free to move along at least at one dimension or will do so because under the force of gravity contact to one or more support elements is lost, the status is **"unstable".**

In embodiments, a dimension along which the sheet metal part 1 will move in an "unstable" configuration is displayed to the user.

Given an arrangement of support elements 3 relative to the sheet metal part 1, known methods from statics or structural mechanics can be used for the **static analysis.** For example, the rank of a coefficient matrix can be determined with the coefficient matrix built up from a system of mechanical equilibrium equations which include the contact force vectors of the support elements. If the rank shows that the system is statically indeterminate (hyperstatic), then movement of the sheet metal part 1 is not constrained with regard to all six degrees of freedom. If the system is not statically indeterminate, then movement is constrained in all six degrees of freedom. However, even when movement is constrained in all degrees of freedom, if an external force, such as gravity, acts on the sheet metal part 1, it may still move and lose contact with one or more of the support elements.

For the **dynamic analysis,** known methods exist as well. For example, it can be done by determining a centre of mass of the sheet metal part 1 and a gravitational force vector acting on the sheet metal part 1, and contact force vectors acting on the sheet metal part 1 at each support element 3, and determining whether the effect of the force vectors is to move the sheet metal part 1 or not.

The following examples illustrate the static and dynamic analysis for a simplified two-dimensional case, that is, with only three degrees of freedom, and no movement along the x axis and no rotation around the z and y axis: In the arrangement of **Figure 1****,** with the clamp 34 being **closed,** the result of the **static analysis** as well as the **dynamic analysis** is that the sheet metal part 1 is constrained with regard to a translation along the y and z axis, and is constrained with regard to a rotation around the x axis. The configuration is stable.

In the situation where the clamp 34 is **open** the result of the **static analysis** is the same, but potentially the sheet metal part 1 now could move in the positive z direction or could rotate around the x axis (with the centre of rotation chosen appropriately) if this movement is triggered by an external, additional force (like gravity). The result of the **dynamic analysis,** when the clamp 34 is open, is that the sheet metal part 1 does not move under the influence of gravity, and the configuration is stable as well.

**Figure 2** illustrates another arrangement of support elements 3. The result of the **static analysis** is that the shown support elements provide bearing forces sufficient to constrain any translation and rotation of the part. The support of element 31 constrains translation in y as well as z direction and in combination with element 32 constrains rotation about the x axis as well. The result of the **dynamic analysis** is that the force vectors corresponding to gravitation and contact forces at the side constraint 31 and support element 32, indicated by arrows, will cause the sheet metal part 1 to rotate around an axis parallel to the x axis. Contact to element 32 will be lost by gravity induced rotation and therefore the configuration is **unstable.**

**Figure 3** shows a further arrangement, with the clamp 34 in an open position. The result of the **static analysis** is again that the shown support elements provide bearing forces sufficient to constrain any part move. The result of the **dynamic analysis** is that the sheet metal part 1 will not move under the force of gravity because the additionally considered clamp 34 now also prevents a gravity induced rotation.

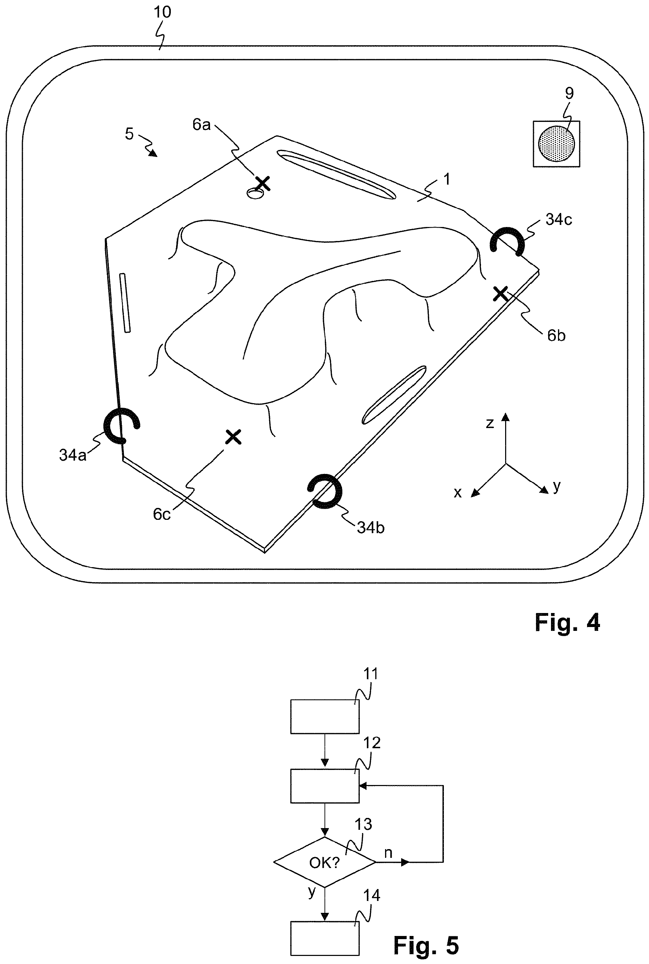

**Figure 4** shows a display unit 10 with a simulated representation of the sheet metal part 1 and support elements 3. The support elements 3 shown, in a very schematic representation, are a first clamp 34a, second clamp 34b and third clamp 34c. Different user specified locations 6 are shown by crosses. For a first user specified location 6a near or on a positioning hole, the computer can automatically determine an associated support element 3 to be a guide pin 33, and determine an outer diameter of the guide pin 33 based on an inner diameter of the hole. The direction of the guide pin can be determined as well based on the orientation of the hole boundary. For a second user specified location 6b near an edge, the associated support element 3 can be either a clamp 34, a support 32, a guide pin 33 or a combination of support and guide pin 31. In case of a guide pin 33 or 31 the computer can automatically determine an appropriate position at the part edge. For a third user specified location 6c not close to an edge or a hole, the associated support element can be either a clamp 34 or a support 32. Orientations of all support elements 3 can be determined automatically by the computer.

A stability status indicator 9 indicates a binary stability status as determined by the currently displayed configuration or arrangement of support elements 3. This can be represented by a colour and/or shape or other visual property of a graphic element of the stability status indicator 9.

An indication of a dimension of possible movement, for an unstable configuration, can be done (not illustrated), for example, by changing a visual property of a displayed translation or rotation axis along which movement will take place.

In embodiments, regions of the part that under the influence of gravity would move in the negative z direction are indicated by changing a visual property of these regions in the visual representation of the sheet metal part 1. Such regions thus indicate locations where placement of an additional support element 3 could be advantageous.

The method for simulating and designing a support structure 2 for assembling or gaging a sheet metal part 1 can be performed by a correspondingly programmed computer or digital data processing system, with a data processing unit and user interface elements such as a display, keyboard and mouse.

**Figure 5** shows a flow diagram of an embodiment of the method described herein. In an initialisation step 11 a computer model of the sheet metal part 1 is retrieved and displayed to the user. Optionally, the user can manipulate the model to set its position and orientation in relation to the support structure 2. In a support element placement and stability analysis step 12, the user places, within the model, a support element 3, and the stability status of the simulated sheet metal part 1 is computed and displayed to the user. In an assessment step 13, if the stability status is not satisfactory, the support element placement and stability analysis step 12 is repeated for a further support element 3, or an already placed support element 3 is removed or moved to another location with respect to the sheet metal part 1. If in the assessment step 13 the stability status is satisfactory 13, in a termination step 14 the corresponding arrangement of the support structure 2 with the support elements 3 is stored as a **result arrangement.**

Given this result arrangement, a real support structure 2 with support elements 3 according to the result arrangement, can be realised. In yet a further step, the real support structure 2 is used in the handling of real sheet metal parts 1.

While the invention has been described in present preferred embodiments of the invention, it is distinctly understood that the invention is not limited thereto, but may be otherwise variously embodied and practised within the scope of the claims.

## Claims

1. A computer-implemented method for simulating and designing a support structure (2) for assembling or gaging a sheet metal part (1), wherein the process comprises
• placing a **sheet metal part** (1) on a **support structure** (2); in which the sheet metal part (1) is held by **support elements** (3);
• holding the sheet metal part (1) by means of the support elements (3) for assembly with one or more further parts or for gaging the sheet metal part (1);
and the method comprises, **in a simulation** of the sheet metal part (1) and support structure (2), designing a selection of support elements (3) and a position and orientation of the support elements (3) by,
• retrieving a position and orientation of the sheet metal part (1) with respect to the support structure (2);
and **for each of a set of user-placed support elements** (3),
• displaying a computer based visual representation (5) of the sheet metal part (1) to a user;
• accepting a user input to **place the support element** (3) relative to the sheet metal part (1);
wherein the method further comprises
• **automatically determining a stability status** of the sheet metal part (1) as determined by the support elements (3);
• the stability status indicating whether the sheet metal part (1) is stably held by the support elements (3);
• **displaying** the stability status to the user.

2. The method of claim 1, wherein the stability status comprises a representation of a **binary value,** indicating whether the sheet metal part (1) will move or not, when held by the support elements (3) and **being subject to no other forces than gravity.**

3. The method of claim 1 or 2, wherein the stability status comprises a representation of a **binary value,** indicating whether movement of the sheet metal part (1) is or is not **constrained with regard to all six degrees of freedom of movement** when held by the support elements (3).

4. The method of one of claims 2 or 3, wherein displaying the stability status to the user comprises displaying on a display unit (10) a **stability status indicator** (9) being a representation **of a binary value.**

5. The method of one of the preceding claims, wherein the stability status comprises a representation of one or more **translation axes and rotation axes,** and in particular translation directions and rotation **directions** in which the sheet metal part (1) is not constrained to move when held by the support elements (3).

6. The method of claim 5, wherein displaying the stability status to the user comprises displaying on a display unit (10) a **visual representation of these axes, in particular directions.**

7. The method of one of the preceding claims, comprising **iteratively repeating** the steps of accepting user input **placing further support elements** (3), and automatically determining and displaying the stability status to the user, until the stability status indicates that the sheet metal part (1) is stably held by the support elements (3), and storing a corresponding arrangement of support elements (3) as a result arrangement.

8. The method of one of the preceding claims, wherein the step of accepting a user input to **place the support element** (3) comprises accepting a user input specifying a **user specified location** (6) on the visual representation (5) of the sheet metal part (1) and optionally a type of support element (3) associated with this user specified location (6).

9. The method of claim 8, wherein the step of accepting a user input to **place the support element** (3) comprises automatically determining a position and orientation of the support element (3) based on a geometry of the sheet metal part (1) at the user specified location (6).

10. The method of one of claims 8 or 9, comprising the step of automatically **determining one or more parameters of the support element** (3) based on the geometry of the sheet metal part (1) at the user-specified location (6).

11. The method of one of claims 8 to 10, comprising, after accepting the user input specifying a location (6) on the visual representation (5) of the sheet metal part (1), performing the step of **automatically determining a type of support element** (3) to be associated with this user specified location (6).

12. **Method for creating a support structure (2) for a sheet metal part (1),** comprising performing the steps according to one of claims 1 to 11 for simulating and designing a support structure (2) for a sheet metal part (1), thereby determining an arrangement of support elements (3), and manufacturing support structure (2) with support elements (3) according to this arrangement.

13. A data processing system programmed to execute a procedure according to one of claims 1 to 11.

14. A computer program loadable into an internal memory of a digital computer, comprising computer program code to make, when said program code is loaded in the computer, the computer execute a procedure according to one of claims 1 to 11.

15. A **method of manufacturing a non-transitory computer readable medium,** comprising the step of storing, on the computer readable medium, computer-executable instructions which when executed by a processor of a computing system, cause the computing system to perform the method steps of one of claims 1 to 11.
